# EUROPÄISCHE PATENTANMELDUNG

(11) **EP 4 660 717 A1**
(43) Veröffentlichungstag der Anmeldung: **10.12.2025**
(21) Anmeldenummer: 25176893.3
(22) Anmeldetag: 16.05.2025
(51) Int. Cl.: G04D 7/00, G06F 21/44, G06F 21/64, G06Q 30/018, G06F 21/88

(54) **UHR UND BAUTEIL FÜR EINE UHR**

(30) Priorität: 07.06.2024 DE 102024115924
(71) Anmelder: FORBENCAP GmbH, 87527 Sonthofen (DE)
(72) Erfinder: Conle, Robert Ludwig, 87527 Sonthofen (DE); Götz, Stefan, 85659 Forstern (DE)
(74) Vertreter: advotec.

(57) **Zusammenfassung**

Eine Uhr (100), insbesondere eine Armbanduhr oder eine Taschenuhr, mit einem Uhrenkörper (102), einem mechanischen Uhrwerk (104), das in dem Uhrenkörper (102) angeordnet ist, und einem Bauteil (106) zur Positionsrückverfolgung der Uhr (100), wobei das Bauteil (106) als ein Teil des mechanischen Uhrwerks (104) oder des Uhrenkörpers (102) in dem Uhrenkörper (102) integriert und/oder angeordnet ist.

## Beschreibung

Die Erfindung betrifft eine Uhr, insbesondere eine Armbanduhr oder eine Taschenuhr, mit einem Uhrenkörper und einem mechanischen Uhrwerk, das in dem Uhrenkörper angeordnet ist. Ferner betrifft die Erfindung ein Bauteil für eine Uhr.

### Stand der Technik

Im Luxusuhrensegment stellen Fälschung, Diebstahl und der Weiterverkauf gestohlener Uhren auf dem Graumarkt ein wachsendes Problem dar. Diese wertvollen Zeitmesser sind häufig Ziel von kriminellen Aktivitäten, und die Nachverfolgung gestohlener Uhren gestaltet sich aufgrund fehlender technologischer Lösungen als äußerst schwierig. Die gestohlenen Uhren können leicht in den Graumarkt gelangen, wo sie erneut verkauft werden, ohne dass die ursprünglichen Eigentümer oder die Hersteller in der Lage sind, ihre Rückverfolgung zu gewährleisten.

Obwohl bereits Lösungsansätze existieren, die auf der Positionsrückverfolgung basieren, indem Einrichtungen beispielsweise an oder in einem Uhrenband oder auf andere Weise an der Uhr befestigt werden, haben diese Methoden entscheidende Schwächen. Insbesondere können diese Einrichtungen leicht, beispielsweise durch den einfachen Austausch des betreffenden Uhrenbandes, entfernt oder anderweitig wirkungslos gemacht werden.

Es ist eine Aufgabe der Erfindung, eine dahingehend verbesserte Uhr und/oder ein Bauteil für eine Uhr anzugeben.

### Offenbarung der Erfindung

Die Aufgabe wird gelöst durch eine Uhr gemäß den Merkmalen des Patentanspruchs 1. Die Aufgabe wird gelöst durch ein Bauteil gemäß den Merkmalen des Patentanspruchs 13. Die Aufgabe wird gelöst durch eine Uhr gemäß den Merkmalen des Patentanspruchs 16. Die Aufgabe wird gelöst durch ein Bauteil gemäß den Merkmalen des Patentanspruchs 17.

Gemäß einem ersten Aspekt wird eine Uhr, insbesondere eine Armbanduhr oder eine Taschenuhr, mit einem Uhrenkörper, einem, insbesondere rein, mechanischen oder zumindest mechanisch arbeitenden Uhrwerk, das in dem Uhrenkörper angeordnet ist, und einem Bauteil zur Positionsrückverfolgung der Uhr vorgeschlagen. Das Bauteil ist als ein Teil des mechanischen oder zumindest mechanisch arbeitenden Uhrwerks oder des Uhrenkörpers in dem Uhrenkörper integriert und/oder angeordnet.

Gemäß einem zweiten Aspekt wird ein Bauteil zur Positionsrückverfolgung einer Uhr vorgeschlagen. Das Bauteil ist als ein Teil eines mechanischen oder zumindest mechanisch arbeitenden Uhrwerks oder eines Uhrenkörpers in dem Uhrenkörper der Uhr integrierbar und/oder anordenbar.

Die für die Uhr gemachten Ausführungen gelten für das Bauteil entsprechend. Dabei versteht es sich, dass sprachliche Abwandlungen von formulierten Merkmalen nach sprachüblicher Praxis umformulierbar sind, ohne dass derartige Formulierungen explizit hier aufgeführt werden müssen.

Die vorliegende Erfindung stellt ein innovatives System zur Nachverfolgung und Authentifizierung von Luxusuhren bereit. Durch den Einsatz des Bauteils wird es möglich, gestohlene Uhren zuverlässig zu orten bzw. örtlich zu identifizieren und so ihre Rückverfolgung zu gewährleisten. Damit bietet die vorliegende Erfindung eine wirksame Lösung, um den illegalen Handel mit gestohlenen Luxusuhren einzudämmen und die Sicherheit sowohl der Endverbraucher als auch der Hersteller zu erhöhen.

Der Uhrenkörper ist vorzugsweise ein Hauptteil der Uhr, der das mechanische oder zumindest mechanisch arbeitende Uhrwerk beherbergt. Das mechanische oder zumindest mechanisch arbeitende Uhrwerk ist vorzugsweise ein traditionelles, mechanisches System zur Zeitmessung, das im Inneren des Uhrenkörpers platziert ist. Es versteht sich, dass die vorliegende Uhr auch eine Batterie aufweisen kann, die Energie für den mechanischen Betrieb des Uhrwerks liefern kann. Somit kann es sich bei der vorliegenden, klassischen Uhr nicht unbedingt um eine Automatikuhr handeln, sondern es kann sich auch um eine batteriebetriebene mechanische Uhr handeln. Somit grenzt sich die vorliegende Erfindung eindeutig von bekannten Smart-Watches ab, die kein (rein) mechanisches Uhrwerk aufweisen. Das Bauteil zur Positionsrückverfolgung ist ein vorliegend speziell entwickeltes Bauteil, das dazu dient, die Position der Uhr nachzuverfolgen, und dass zudem ein vorzugsweise integraler Bestandteil der Uhr ist. Das innovative Merkmal der vorliegenden Uhr besteht darin, dass das Bauteil zur Positionsrückverfolgung entweder als ein integraler Bestandteil des mechanischen Uhrwerks oder des Uhrenkörpers konzipiert und in den Uhrenkörper integriert oder angeordnet ist.

Durch die Integration des Bauteils zur Positionsrückverfolgung in das mechanische Uhrwerk oder den Uhrenkörper wird es nahezu unmöglich, das Bauteil zu entfernen oder zu deaktivieren, ohne die Uhr selbst zu zerstören. Dies erhöht die Sicherheit gegen Diebstahl erheblich. Da das Bauteil zur Positionsrückverfolgung nicht einfach durch den Austausch von externen Komponenten wie dem Uhrenband entfernt werden kann, ist die Uhr besser gegen Manipulationsversuche geschützt. Die Integration des Bauteils innerhalb des Uhrenkörpers oder des mechanischen Uhrwerks bedeutet, dass keine zusätzlichen, sichtbaren Komponenten notwendig sind. Dies bewahrt das ästhetische Design und die traditionelle Optik der Uhr.

Da das Bauteil fest im Inneren der Uhr integriert ist, bleibt die Funktion der Positionsrückverfolgung vorzugsweise über die gesamte Lebensdauer der Uhr hinweg aktiv, was eine langfristige Nachverfolgbarkeit ermöglicht. Die Kombination eines traditionellen mechanischen Uhrwerks mit moderner Technologie zur Positionsrückverfolgung bietet den Vorteil, moderne Sicherheitsfunktionen in einem klassischen, hochwertigen Produkt zu vereinen. Diese Vorteile machen die Uhr nicht nur sicherer, sondern auch zu einem technologisch fortschrittlichen Produkt, das den Anforderungen des modernen Luxusuhrensegments gerecht wird.

Die Vermarktungsstrategie für einen Uhrenhersteller, der eine jährliche Gebühr für die Positionsrückverfolgung seiner Luxusuhren erhebt, beginnt mit der klaren Zielsetzung, die Sicherheit und den Mehrwert dieser innovativen Produkte zu betonen. Diese Strategie richtet sich primär an wohlhabende Einzelpersonen, die in Luxusuhren investieren und großen Wert auf Sicherheit und Exklusivität legen. Ebenso werden Sammler und Enthusiasten angesprochen, die ihre wertvollen Kollektionen schützen möchten, sowie Versicherungsunternehmen, die Partnerschaften zur Absicherung dieser Uhren in Betracht ziehen könnten.

Eine umfassende Marktanalyse zeigt, dass es eine wachsende Nachfrage nach Sicherheitslösungen im Luxussegment gibt. Konkurrenzprodukte, die nicht über vergleichbare Sicherheitsmerkmale verfügen, bieten eine Gelegenheit, die Alleinstellungsmerkmale der neuen Uhren hervorzuheben. Zudem zeigt sich ein Trend zur Integration moderner Technologien in traditionelle Luxusprodukte, was die Akzeptanz der neuen Sicherheitsfeatures begünstigt.

Das Produkt selbst zeichnet sich durch mehrere Schlüsselmerkmale aus: Ein integriertes Bauteil zur Positionsrückverfolgung, das unauffällig und manipulationssicher in den Uhrenkörper eingebettet ist, sowie die Beibehaltung des hochwertigen, ästhetischen Designs der Uhren. Die jährliche Gebühr für die Nutzung dieses Tracking-Systems ist so gestaltet, dass sie regelmäßige Updates, Wartung und zusätzliche Sicherheitsfeatures umfasst.

Einem Uhrenhersteller bietet die vorgestellte Uhr zudem eine Möglichkeit zur Eröffnung eines neuen Geschäftsmodells, da dieses zusätzlich Sicherheitsmerkmal als Zusatz von dem Kunden zugekauft werden kann. Ferner kann der Uhrenhersteller einen Service zur Sicherung der Positionsrückverfolgung bereitstellen bzw. anbieten, der von dem Uhrenkäufer beispielsweise durch eine jährlich zu zahlende Service-Gebühr bezahlt wird. Ferner kann der Uhrenhersteller eine vollständige Verschlüsselung der Positionsermittlung anbieten, um so eine Positionsrückverfolgung durch unberechtigte Dritte zu verhindern. Die vorliegende Uhr bzw. das Bauteil machen es zudem möglich, eine etwaig für die Luxusuhr von dem Käufer benötigte Versicherung in ihrem Beitrag zu reduzieren, da durch die vorliegende Uhr ein Diebstahlrisiko verringert und derart mit einem verringerten Risikofaktor bei einer zuständigen Versicherung in der Beitragsberechnung einbezogen werden muss.

Die Uhr kann auch mehrere Bauteile zur Positionsrückverfolgung aufweisen, um derart beispielsweise Redundanz und derart eine weiterhin erhöhte Sicherheit bereitzustellen.

Das Bauteil zur Positionsrückverfolgung kann als eine Art System on a Chip (SoC) zur Positionsverfolgung ausgebildet sein. Ein SoC ist eine hochintegrierte elektronische Komponente, die alle notwendigen Funktionen zur Bestimmung und Übermittlung der Position auf einem einzigen Halbleiterchip vereint, der in einem anderen Bauteil eingebettet oder integriert oder aufgebracht sein kann. Das SoC-Bauteil ist vorzugsweise nur bis zu wenigen Millimetern groß, und hat ein kompaktes Design. Im Inneren des SoC befindet sich vorzugsweise ein komplexes Netz aus Mikroschaltungen. Dazu gehören ein leistungsfähiger Mikrocontroller zur Verarbeitung von Positionsdaten, ein GPS-Empfänger, der Signale von Satelliten empfängt und verarbeitet, sowie verschiedene Sensoren, die zusätzliche Daten wie Beschleunigung und Richtung erfassen können.

Diese Sensoren sind auf dem gleichen Chip integriert und arbeiten vorzugsweise nahtlos zusammen, um präzise Positionsdaten zu liefern. Der SoC umfasst vorzugsweise eine Antenne, die in das Silizium eingebettet ist, um die Kommunikation mit GPS-Satelliten zu ermöglichen. Diese Antenne ist vorzugsweise so konzipiert, dass sie trotz ihrer geringen Größe eine hohe Empfindlichkeit und Genauigkeit bietet. Um den Energieverbrauch des SoC zu minimieren, ist der SoC für Positionsverfolgung vorzugsweise mit Energiemanagement-Funktionen ausgestattet. Dies ermöglicht es dem SoC-basierten Bauteil, in einem energiesparenden Modus zu arbeiten, wenn er nicht aktiv Daten verarbeitet. Der SoC kann beispielsweise als Einschicht-Beschichtung auf einem Funktionsbauteil des mechanischen Uhrwerks aufgebracht und/oder in einem solchen Funktionsbauteil integriert sein.

Die zur Positionsrückverfolgung generierten Positionsinformationen können vorzugsweise durch symmetrische oder asymmetrische Verschlüsselung gegen einen äußeren Zugriff gesichert werden. Dadurch ist es möglich, dass das Bauteil Standortinformationen verschlüsselt senden kann, die durch Dritte nicht interpretiert werden können. Eine asymmetrische Verschlüsselung hat den Vorteil, dass selbst in einem Fall, dass das Bauteil selbst gehackt und ein Bauteilschlüssel ausgelesen werden würde, keine Entschlüsselung erfolgen kann. Der öffentliche Schlüssel zur Entschlüsselung kann vorzugsweise werkseitig einprogrammiert oder alternativ over-theair erneuert werden.

In einem weiteren Aspekt wird vorgeschlagen, dass das Bauteil dazu eingerichtet ist, eine zur Positionsrückverfolgung verwendete elektrische Energie durch eine elektrische Energie und/oder mechanische Bewegungsenergie der Uhr zu beziehen.

Ein weiterer Aspekt der Erfindung beschreibt ein Bauteil zur Positionsrückverfolgung, das die benötigte elektrische Energie entweder aus der elektrischen Energiequelle der Uhr oder aus deren mechanischer Bewegungsenergie bezieht. Dieses Bauteil ist so integriert, dass es die vorhandene Energiequelle der Uhr effizient nutzt, sei es durch eine Batterie, einen Akku oder die mechanische Bewegung des Uhrwerks. Der Vorteil dieses Ansatzes liegt in der erhöhten Effizienz, da keine zusätzlichen Batterien oder externen Energiequellen für das Bauteil erforderlich sind. Das Bauteil kann die elektrische Energie der Uhr direkt verwenden, was insbesondere bei batteriebetriebenen Uhren von Vorteil ist. Alternativ oder ergänzend dazu kann es die mechanische Bewegungsenergie des Uhrwerks in elektrische Energie umwandeln, um die Positionsrückverfolgung kontinuierlich zu betreiben. Dies ist besonders nützlich für mechanische Uhren, die regelmäßig bewegt werden und somit eine stetige Energiequelle bieten. Ein weiterer Vorteil ist die Wartungsarmut. Da das Bauteil die Energie direkt aus der Uhr bezieht, reduziert sich der Wartungsaufwand erheblich. Es müssen keine separaten Batterien für das Bauteil ausgetauscht oder aufgeladen werden. Darüber hinaus ermöglicht die Integration des Energiebezugs in das bestehende Uhrensystem ein unauffälliges Design, das die ästhetischen und funktionalen Merkmale der Luxusuhr nicht beeinträchtigt.

In einem weiteren Aspekt wird vorgeschlagen, dass das Bauteil dazu eingerichtet ist, zur Positionsrückverfolgung ein Positionssignal bereitzustellen, wobei das Positionssignal optional an ein Endgerät eines Nutzers der Uhr und/oder an einen Server und/oder eine Cloud eines Uhrenherstellers und/oder eines Sicherheitsdienstes sendbar ist.

Dieses Positionssignal kann flexibel an verschiedene Empfänger gesendet werden. Dazu gehören unter anderem das Endgerät eines Nutzers der Uhr, ein Server und/oder eine Cloud des Uhrenherstellers sowie ein Sicherheitsdienst. Das Positionssignal ermöglicht die genaue Nachverfolgung der Uhr und kann optional direkt an das Smartphone und/oder ein anderes Endgerät des Nutzers gesendet werden, um den Standort der Uhr vorzugsweise in Echtzeit zu überwachen. Alternativ oder ergänzend kann das Signal an einen zentralen Server oder eine Cloud-Infrastruktur des Uhrenherstellers übertragen werden, wo die Daten beispielsweise sicher gespeichert und/oder insbesondere zentral oder dezentral verarbeitet werden können. Diese Option bietet den Vorteil, dass der Hersteller umfassende Sicherheits- und Support-Dienstleistungen anbieten kann. Zusätzlich oder alternativ besteht die Möglichkeit, das Positionssignal an einen Sicherheitsdienst zu senden, der speziell für die Überwachung und den Schutz von Luxusuhren eingerichtet ist. Dies erhöht die Sicherheit und bietet den Nutzern einen zusätzlichen Schutzmechanismus im Falle eines Diebstahls. Durch die flexible Übertragungsmöglichkeit des Positionssignals wird ein hohes Maß an Sicherheit und Kontrolle gewährleistet, was die Attraktivität der Uhr für sicherheitsbewusste Käufer erhöht. Dieser Ansatz zur Positionsrückverfolgung stellt sicher, dass die Uhr jederzeit nachverfolgt werden kann, was den Schutz vor Diebstahl erheblich verbessert und den Nutzern ein Gefühl von Sicherheit und Vertrauen vermittelt.

In einem weiteren Aspekt wird vorgeschlagen, dass das Bauteil mit einem mobilen Tracking Device koppelbar ist.

Diese Funktion ermöglicht es, die Positionsrückverfolgung der Uhr durch die Integration eines mobilen Tracking Device zu erweitern und zu verbessern. Das Bauteil ist so konzipiert, dass es eine nahtlose Verbindung mit einem mobilen Tracking Device herstellen kann, wodurch die genaue Lokalisierung der Uhr noch einfacher und präziser wird. Durch die Kopplung mit einem mobilen Tracking Device können Nutzer die Uhr mit den bekannten Funktionen und Vorteilen mobiler Tracking Devices kombinieren. Dies umfasst die Möglichkeit, die Uhr über ein Netzwerk von verbundenen Geräten zu verfolgen, die Verwendung der Find My-App zur Standortbestimmung und die Benachrichtigung, wenn die Uhr in der Nähe eines registrierten Geräts gefunden wird. Diese Integration bietet den Nutzern zusätzliche Sicherheit und Bequemlichkeit, da sie auf ein bewährtes und weit verbreitetes Ortungssystem zugreifen können. Die Kombination der Uhr mit einem mobilen Tracking Device ermöglicht eine effizientere und zuverlässigere Nachverfolgung auch in Kombination mit anderen werthaltigen Gegenständen, für deren Ortung und Positionsrückverfolgung ein mobiles Tracking Device verwendet wird, was den Schutz vor Verlust oder Diebstahl weiter erhöht. Durch diese innovative Koppelbarkeit wird die Uhr zu einem noch attraktiveren und sichereren Produkt für sicherheitsbewusste Käufer. Die Kopplung mit einem mobilen Tracking Device kann beispielsweise bei einer Initialisierung der Uhr mittels Bluetooth und/oder NRF realisiert sein.

Ein mobiles Tracking Device ist ein kleines, kompaktes Tracking-Device, das entwickelt wurde, um persönliche Gegenstände wie Schlüssel, Taschen, Geldbörsen und/oder Gepäckstücke und/oder sonstige Wertgegenstände zu lokalisieren und ggf. bei Verlust wiederzufinden. Diese Geräte nutzen vorzugsweise Bluetooth-Technologie, um eine Verbindung zu einem Smartphone herzustellen. Sobald die Verbindung hergestellt ist, kann der Benutzer über eine begleitende App den Standort des Geräts auf einer Karte sehen und Benachrichtigungen erhalten, wenn der Gegenstand gefunden wird oder sich außerhalb der Bluetooth-Reichweite befindet. Diese Geräte sind vorzugsweise klein und leicht, sodass sie problemlos an oder in verschiedenen Gegenständen befestigt werden können. Dies ermöglicht es dem Benutzer, nicht nur den ungefähren Standort zu sehen, sondern auch genaue Richtungsanweisungen zu erhalten, um den verlorenen Gegenstand zu finden. Diese Tracking-Geräte verfügen vorzugsweise über zusätzliche Funktionen wie einen Geräuschalarm, der aktiviert werden kann, um das Auffinden des Gegenstands in der Nähe zu erleichtern. Einige Modelle bieten austauschbare oder wiederaufladbare Batterien, wodurch sie über einen längeren Zeitraum hinweg verwendet werden können. Außerdem sind viele dieser Geräte wasser- und staubdicht, was ihre Haltbarkeit und Vielseitigkeit erhöht. Ein mobiles Tracking Device nutzt vorzugsweise ein Netzwerk eines Benutzers oder ein anderes erreichbares Netzwerk, um den Standort eines verlorenen Gegenstands zu melden. Wenn sich der Gegenstand außerhalb der Bluetooth-Reichweite des Besitzers befindet, kann jedes Gerät eines anderen Benutzers, das sich in der Nähe befindet, anonym den Standort des verlorenen Gegenstands an den Besitzer zurückmelden. Dies erhöht die Chancen, den verlorenen Gegenstand wiederzufinden, erheblich.

In einem weiteren Aspekt wird vorgeschlagen, dass das Bauteil dazu eingerichtet ist, einen digitalen Fingerabdruck bzw. eine digitale Identifikationsnummer der Uhr, insbesondere in auslesbarer Form, zu speichern.

Der digitale Fingerabdruck ist vorzugsweise als eine Datensequenz, die als Eingabe in eine vorgegebene Hash-Funktion eine vorgegebene Hash-Prüfsumme ergibt, oder als eine Blockchain beispielsweise auf dem Bauteil oder auf einem externen Server oder einem sonstigen Netzwerk hinterlegt. Der digitale Fingerabdruck stellt eine Art "Authentifizierungsnummer" der Uhr dar, durch den diese Fälschungssicher gemacht werden kann. So kann beispielsweise nur ein autorisierter Hersteller oder Vertreiber der Uhr den digitalen Fingerabdruck auslesen und abgleichen können, und derart sicherstellen, dass die betreffende Uhr "echt" ist. Auch ein Kunde kann so eindeutig nachvollziehen, dass die von ihm ggf. zu erwerbende Uhr "echt" ist und es sich nicht um eine Fälschung bzw. ein Plagiat handelt. Ein bedeutender Vorteil dabei ist somit die Einführung einer digital auslesbaren "Kennnummer" für Uhren. Diese kann vom Hersteller verwendet werden, um zweifelsfrei festzustellen, dass es sich um ein Original der Uhr handelt, und um nachzuverfolgen, durch wenn eine Uhr verkauft wurde und/oder wer die Uhr gekauft hat bzw. wer sie zuletzt besaß. Zudem kann der Eigentümer die Uhr mittels dieses digitalen Fingerabdrucks als gestohlen melden. Ein Händler, ein Uhrengeschäft und/oder eine zertifizierte Werkstatt (auch solche ohne direkten Kundenkontakt), die den digitalen Fingerabdruck ausliest, kann dann entsprechend reagieren und die betreffende Uhr als Hehlerware melden. Die vorliegende Technologie hat gegenüber dem Stand der Technik den Vorteil, dass die ansonsten oftmals leicht zu fälschenden Garantiekarten und Kartons nicht mehr notwendig sind, um die Echtheit der Uhr beim Weiterverkauf zu überprüfen. Der digital auslesbare und eindeutig identifizierbare Fingerabdruck kann ferner auch für ein Register genutzt werden, in dem Hersteller-authentifizierte Uhren eintragbar sind. In einem solchen Register kann beispielsweise mittels Blockchain-Technologie eine Käuferkette dokumentiert werden, sodass zumindest der Uhrenhersteller die Authentizität nachweisen kann. Für den Hersteller bedeutet dies, dass Plagiate leichter zu erkennen sind und damit der Anlagewert der Uhr steigt, da keine "einfachen" Fälschungen mehr existieren, vorausgesetzt, der Hersteller führt das Register ordnungsgemäß. Für den Kunden bietet dies ferner den Vorteil, sicher sein zu können, dass es sich um eine "echte" Uhr und nicht um eine Fälschung handelt. Ein wichtiger Aspekt dabei ist, dass der digitale Fingerabdruck ferner Informationen über einen Uhrentyp und andere Details der Uhr aufweisen kann. Ferner ist der digitale Fingerabdruck nicht öffentlich. Dadurch wird verhindert, dass Fälscher ein vorliegendes Bauteil mit dem digitalen Fingerabdruck in ihre Fälschungen einbauen können. Der digitale Fingerabdruck kann vorzugsweise auch über Hashing implementiert werden. Ein derartiger Hash kann beispielsweise zusammen mit der Uhrzeit verrechnet werden, sodass nur autorisierte Benutzer die Authentifizierung vornehmen (oder nachbilden) können.

In einem weiteren Aspekt wird vorgeschlagen, dass das Bauteil als ein Funktionsbauteil des in dem Uhrenkörper angeordneten, mechanischen Uhrwerks oder des Uhrenkörpers selbst ausgebildet ist.

Das Bauteil kann also als Funktionsbauteil des im Uhrenkörper angeordneten mechanischen Uhrwerks oder als ein Funktionsbauteil des Uhrenkörpers selbst ausgebildet sein. Das Bauteil ist vorzugsweise nahtlos in die Funktionsstruktur der Uhr integriert, beispielsweise als Teil des mechanischen Uhrwerks oder als Bestandteil des Uhrenkörpers. Durch diese Integration wird das Bauteil zu einem wesentlichen und unauffälligen Bestandteil der Uhr, was bedeutet, dass es nicht ohne weiteres entfernt oder deaktiviert werden kann, ohne die Uhr selbst zu beschädigen. Dies bietet einen erheblichen Sicherheitsvorteil, da das Bauteil tief in die Mechanik und Struktur der Uhr eingebettet ist. Die Ausbildung des Bauteils als Funktionsbauteil des mechanischen Uhrwerks ermöglicht es, dass es harmonisch mit den anderen Komponenten der Uhr zusammenarbeitet, ohne deren Funktionalität oder Design zu beeinträchtigen. Ferner bietet die Option, das Bauteil als Teil des Uhrenkörpers zu gestalten, zusätzliche Flexibilität in der Konstruktion und erhöht die Robustheit der Positionsrückverfolgung. Diese Gestaltung stellt sicher, dass die Positionsrückverfolgung ein integraler und untrennbarer Bestandteil der Uhr ist, was die Sicherheit und Verlässlichkeit des Systems erheblich steigert. Nutzer können somit von einer erhöhten Sicherheit profitieren, ohne dass die ästhetische und mechanische Qualität der Luxusuhr beeinträchtigt wird.

In einem weiteren Aspekt wird vorgeschlagen, dass das Funktionsbauteil als ein Rotor, ein drehbares Massestück, eine Stoßsicherung, ein Spiralschlüssel, eine Spiralfeder, ein Anker, ein Ankerrad, ein Aufzugrad, eine Aufzugkrone, eine Krone, eine Sperrklinke, ein Sperrrad, eine Schraube zur Werksbefestigung, zumindest ein Teil eines Bandanstoßes, zumindest ein Teil einer Glasfassung, zumindest ein Teil einer Lünette ausgebildet ist.

Diese Vielfalt an möglichen Bauteilen zeigt die Flexibilität und Anpassungsfähigkeit des Funktionsbauteils innerhalb der Uhr. Durch die Integration in ein so essentielles und vielfältig gestaltbares Bauteil wird das Positionsrückverfolgungssystem zu einem integralen Bestandteil der Uhr, ohne die ästhetische oder mechanische Funktionalität zu beeinträchtigen. Beispielsweise könnte das Funktionsbauteil als eine Spiralfeder und/oder als ein Anker des Uhrwerks ausgebildet sein, wodurch es tief in die Mechanik der Uhr eingebettet wird. Alternativ könnte es als Teil der Aufzugkrone oder der Krone selbst gestaltet sein, wodurch es unauffällig bleibt und gleichzeitig leicht zugänglich ist. Auch die Verwendung als Bestandteil der Glasfassung oder der Lünette bietet innovative Möglichkeiten zur diskreten Integration. Diese breite Palette an möglichen Ausgestaltungen gewährleistet, dass das Funktionsbauteil sich harmonisch in das Design und die Mechanik der Uhr einfügt, was die Sicherheit und Effizienz des Positionsrückverfolgungssystems maximieren. Nutzer profitieren somit von einer erhöhten Sicherheit und Nachverfolgbarkeit ihrer Luxusuhren, während die ästhetische Integrität und mechanische Exzellenz der Uhren erhalten bleibt.

In einem weiteren Aspekt wird vorgeschlagen, dass das Bauteil über eine intrinsische Bewegung des Bauteils und/oder über eine mittels der Uhr (100) bereitgestellte Energy Harvesting Funktion mit (elektrischer) Energie versorgbar ist.

Ein weiterer Aspekt der Erfindung beschreibt ein Bauteil, das über eine intrinsische Bewegung mit Energie versorgbar ist. Das Bauteil nutzt vorzugsweise die natürlichen Bewegungen der Uhr oder der Komponenten im Inneren der Uhr, um die benötigte Energie für seine Funktionalität zu erzeugen. Die intrinsische Bewegung könnte beispielsweise aus der Bewegung des Ankers oder der Rotation anderer mechanischer Teile stammen. Diese Eigenschaft ermöglicht es dem Bauteil, kontinuierlich und zuverlässig Energie zu gewinnen, ohne dass externe Energiequellen oder zusätzliche Batterien erforderlich sind. Durch die Nutzung der intrinsischen Bewegung bietet dieses Bauteil mehrere Vorteile. Es erhöht die Effizienz der Energieversorgung, da die natürliche Bewegung der Uhr in elektrische Energie umgewandelt wird. Dies reduziert den Wartungsaufwand erheblich, da keine separaten Batterien ausgetauscht oder aufgeladen werden müssen. Darüber hinaus bleibt die ästhetische und mechanische Integrität der Uhr vollständig erhalten, da keine zusätzlichen sichtbaren Komponenten erforderlich sind. Diese Energieversorgungslösung gewährleistet, dass das Bauteil dauerhaft und zuverlässig betrieben werden kann, wodurch die Funktionalität des Positionsrückverfolgungssystems erheblich verbessert wird.

Die Energie für die Positionsrückverfolgung kann auch über Energy Harvesting bereitgestellt werden. Eine Möglichkeit zum Energy Harvesting ergibt sich über eine Thermogeneration aufgrund eine Wärmestroms, der ausgehend von dem Handgelenk von der Uhr weggerichtet ist und sich aus einer Temperaturdifferenz zwischen der Uhr und dem Arm ergibt. Eine derartig arbeitender Thermogenerator kann vorzugsweise in eine Rückplatte und/oder einem Armband integriert sein. Alternativ das für das Energy Harvesting die Masse der Uhr und somit die Trägheit verwendet werden. Beispielsweise kann eine schwingbare Kontaktplatte am Arm gegen die Masse der Uhr arbeiten und so für die Energiegewinnung benötigte Momente erzeugen. Ebenfalls kann für das Energy Harvesting eine exzentrisch gelagerte Masse in dem Uhrenkörper vorgesehen sein.

In einem weiteren Aspekt wird vorgeschlagen, dass das Bauteil dazu ausgebildet ist, bei einem Ausfallen der Uhr und/oder bei oder nach einem Öffnen des Uhrenkörpers ein Not-Positionssignal und/oder ein Warnsignal bereitzustellen.

Das Bauteil ist vorzugsweise so konzipiert, dass es kritische Zustände erkennt und daraufhin automatisch entsprechende Signale sendet. Bei einem Ausfall der Uhr, beispielsweise wenn das Uhrwerk stehen bleibt oder eine andere Funktionsstörung auftritt, aktiviert das Bauteil ein Not-Positionssignal. Dieses Signal ermöglicht es vorzugsweise, die letzte bekannte Position der Uhr zu ermitteln, was besonders im Fall eines Diebstahls oder Verlusts von großem Vorteil ist. Alternativ oder ergänzend ist das Bauteil so ausgelegt, dass es ein Warnsignal sendet, wenn der Uhrenkörper geöffnet wird. Dies könnte auf einen Manipulationsversuch hinweisen, etwa wenn jemand versucht, das Bauteil zu entfernen oder die Uhr unbefugt zu öffnen. Das Warnsignal alarmiert den Besitzer und/oder den Sicherheitsdienst, wodurch eine sofortige Reaktion möglich wird. Diese Merkmale bieten Sicherheitsvorteile. Die Fähigkeit, Not-Positionssignale bei einem Ausfall der Uhr zu senden, stellt sicher, dass die Uhr auch unter ungewöhnlichen Umständen nachverfolgt werden kann. Das Senden eines Warnsignals bei einem Öffnungsversuch erhöht den Schutz vor Manipulation und Diebstahl.

In einem weiteren Aspekt wird vorgeschlagen, dass das Bauteil und/oder die Uhr eine drahtlose Kommunikationsschnittstelle zur Übermittlung eines durch das Bauteil bereitgestellten Positionssignals und/oder eines Alarmsignals umfasst.

Die drahtlose Schnittstelle ermöglicht die Echtzeit-Kommunikation zwischen der Uhr und externen Geräten oder Systemen. Die drahtlose Kommunikationsschnittstelle kann verschiedene Technologien wie Bluetooth, Wi-Fi oder Mobilfunkverbindungen nutzen, um sicherzustellen, dass die Signale zuverlässig und schnell übertragen werden. Das Positionssignal, das von dem Bauteil bereitgestellt wird, kann somit an ein Endgerät des Nutzers, einen Server oder eine Cloud gesendet werden, wo die Daten gespeichert und verarbeitet werden können. Dies ermöglicht eine kontinuierliche und genaue Nachverfolgung der Uhr. Alternativ oder ergänzend zur Übermittlung von Positionssignalen kann die drahtlose Schnittstelle auch Alarmsignale senden. Diese Alarmsignale werden aktiviert, wenn ungewöhnliche Ereignisse auftreten, wie beispielsweise ein Diebstahlversuch, der Ausfall der Uhr oder das unbefugte Öffnen des Uhrenkörpers. Diese Signale können ebenfalls an die Endgeräte des Nutzers oder an Sicherheitsdienste gesendet werden, um sofortige Maßnahmen zu ermöglichen. Die Integration einer drahtlosen Kommunikationsschnittstelle bietet mehrere Vorteile. Sie erhöht die Flexibilität und Benutzerfreundlichkeit der Uhr, da die Nutzer in Echtzeit über den Status und den Standort ihrer Uhr informiert werden können. Darüber hinaus verbessert sie die Sicherheit, da Alarmsignale sofort gesendet werden können, wodurch eine schnelle Reaktion auf potenzielle Bedrohungen möglich ist.

In einem weiteren Aspekt wird vorgeschlagen, dass das Bauteil über eine Benutzeroberfläche eines Endgerätes, insbesondere kabellos, vorzugsweise nutzerspezifisch, konfigurierbar.

Die Benutzeroberfläche ermöglicht es dem Nutzer vorzugsweise, die Einstellungen und Funktionen des Bauteils bequem und individuell anzupassen. Die Benutzeroberfläche ist ein Teil eines externen Endgerätes und nicht Teil der Uhr. Die kabellose Konfigurierbarkeit bedeutet, dass Nutzer ihre Uhr über ein Smartphone, Tablet und/oder einen Computer drahtlos steuern können. Durch eine speziell entwickelte App und/oder Software können sie auf die Benutzeroberfläche zugreifen und das Bauteil konfigurieren, ohne physische Verbindungen herstellen zu müssen. Die nutzerspezifische Konfigurierbarkeit erlaubt es, die Einstellungen des Bauteils an die individuellen Bedürfnisse und Vorlieben des Nutzers anzupassen. Dazu gehören beispielsweise die Aktivierung und Deaktivierung bestimmter Funktionen, das Festlegen von Alarm- und Benachrichtigungseinstellungen sowie die Anpassung der Sensitivität und Frequenz der Positionsrückverfolgung. Diese Merkmale bieten Vorteile in Bezug auf Benutzerfreundlichkeit und Individualisierung. Nutzer können das Bauteil so einstellen, dass es ihren spezifischen Anforderungen entspricht, was die Funktionalität und Sicherheit der Uhr weiter erhöht. Die einfache und intuitive Bedienung über eine Benutzeroberfläche macht die Konfiguration schnell und unkompliziert, was den Komfort und die Zufriedenheit der Nutzer steigert.

In einem weiteren Aspekt wird vorgeschlagen, dass das Bauteil zur Positionsrückverfolgung nur durch einen durch den Uhrenhersteller oder einen Sicherheitsdienstleister bereitgestellten Sicherheitsschlüssel, insbesondere auf Basis einer Blockchain, aktivierbar und/oder deaktivierbar ist.

Der Sicherheitsschlüssel basiert insbesondere auf einer Blockchain-Technologie, die höchste Sicherheitsstandards gewährleistet. Durch die Nutzung eines solchen Sicherheitsschlüssels wird sichergestellt, dass nur autorisierte Parteien das Bauteil zur Positionsrückverfolgung ein- oder ausschalten können. Die Blockchain-Technologie bietet dabei eine dezentrale und manipulationssichere Methode zur Verwaltung und Verifikation der Schlüssel, wodurch die Sicherheit des Systems erheblich erhöht wird. Die Implementierung dieses Merkmals verhindert unbefugten Zugriff auf die Positionsrückverfolgungsfunktion der Uhr. Nur der Uhrenhersteller oder ein vertrauenswürdiger Sicherheitsdienstleister hat die Möglichkeit, den Sicherheitsschlüssel zu generieren und zu verwalten. Dies bietet den Nutzern ein hohes Maß an Sicherheit und Schutz, da potenzielle Manipulationsversuche effektiv verhindert werden. Zusätzlich ermöglicht die Blockchain-Technologie eine transparente und nachvollziehbare Nachverfolgung aller Aktivitäten im Zusammenhang mit der Aktivierung und Deaktivierung des Bauteils. Jede Änderung wird in der Blockchain dokumentiert, was eine lückenlose Überwachung und Verifikation ermöglicht.

In einem weiteren Aspekt wird vorgeschlagen, dass das Bauteil eine Selbsttestfunktion aufweist, die die Funktionalität des Bauteils zur Positionsrückverfolgung überprüft und vorzugsweise einen Nutzer über einen Status informiert.

Die Selbsttestfunktion überprüft vorzugsweise regelmäßig die Funktionalität des Bauteils und stellt sicher, dass es ordnungsgemäß arbeitet. Die Selbsttestfunktion ist vorzugsweise so konzipiert, dass sie automatisch aktiviert wird und eine umfassende Überprüfung aller relevanten Komponenten und Systeme des Bauteils durchführt. Im Falle einer Störung oder eines Fehlers wird der Nutzer vorzugsweise sofort über den Status informiert. Dies kann über eine Benachrichtigung auf einem verbundenen Endgerät, wie einem Smartphone oder Tablet, geschehen. Durch diese Selbsttestfunktion wird die Zuverlässigkeit und Sicherheit des Positionsrückverfolgungssystems gesteigert. Nutzer können sich darauf verlassen, dass das System jederzeit funktionsfähig ist und im Bedarfsfall präzise Positionsdaten liefert. Die automatische Überprüfung minimiert das Risiko von Ausfällen und erhöht die allgemeine Betriebssicherheit. Die insbesondere proaktive Statusbenachrichtigung informiert den Nutzer umgehend über den Zustand des Bauteils, wodurch eine schnelle Reaktion auf potenzielle Probleme ermöglicht wird. Dies trägt dazu bei, dass die Luxusuhr stets optimal geschützt und überwacht bleibt.

In einem dritten Aspekt wird eine Uhr, insbesondere eine Armbanduhr oder eine Taschenuhr, vorgeschlagen. Die Uhr weist einen Uhrenkörper, ein mechanisches oder zumindest mechanisch arbeitendes Uhrwerk, das in dem Uhrenkörper angeordnet ist, und ein Bauteil auf. Das Bauteil ist dazu eingerichtet, einen digitalen Fingerabdruck bzw. eine digitale Identifikationsnummer der Uhr, insbesondere in auslesbarer Form, zu speichern, wobei das Bauteil als ein Teil des mechanischen Uhrwerks oder des Uhrenkörpers in dem Uhrenkörper integriert und/oder angeordnet ist.

In einem vierten Aspekt wird Bauteil vorgeschlagen, das dazu eingerichtet ist, einen digitalen Fingerabdruck bzw. eine digitale Identifikationsnummer der Uhr, insbesondere in auslesbarer Form, zu speichern, wobei das Bauteil als ein Teil eines mechanischen Uhrwerks oder eines Uhrenkörpers in dem Uhrenkörper der Uhr integrierbar und/oder anordenbar ist.

Die vorliegende Erfindung lässt sich grundsätzlich auch auf einem fünften Aspekt ausweiten, in dem ein Bauteil vorgeschlagen wird, das dazu eingerichtet ist, einen digitalen Fingerabdruck bzw. eine digitale Identifikationsnummer eines Luxusgegenstandes, insbesondere in auslesbarer Form, zu speichern, wobei das Bauteil in dem Luxusgegenstand zumindest teilweise integrierbar und/oder anordenbar ist. Das Bauteil ist dabei vorzugsweise derart integrierbar, dass es nicht entfernt werden kann. Das Bauteil kann beispielsweise als eine Art Chip oder eine Platine ausgebildet sein, Das Bauteil kann als flexibler Chip ausgebildet sein, und sich so beispielsweise auch in eine Tasche oder ein Kleidungsstück integrieren lassen, ohne dass dies eindeutig ertastbar ist. Das Bauteil kann beispielsweise Teil einer Kennzeichnung, beispielsweise eines Labels, des Luxusgegenstandes sein. Der Luxusgegenstand kann ein Schmuckstück, ein Kleidungsstück, eine Tasche und/oder ein Gepäckstück und/oder dergleichen umfassen, ist jedoch nicht auf die vorgenannten beschränkt.

Die für die Uhr gemäß dem ersten Aspekt sowie die für das Bauteil gemäß dem zweiten Aspekt genannten Merkmale und weiteren Aspekte gelten für die Uhr gemäß dem dritten Aspekt und für das Bauteil gemäß dem vierten Aspekt in gleicher Weise, ohne dass hierzu eine explizite Wiederholung notwendig ist. Die für die Uhr gemäß dem dritten Aspekt sowie die für das Bauteil gemäß dem vierten Aspekt genannten Merkmale und weiteren Aspekte gelten für die Uhr gemäß dem ersten Aspekt und für das Bauteil gemäß dem zweiten Aspekt in gleicher Weise, ohne dass hierzu eine explizite Wiederholung notwendig ist. So können insbesondere Ansprüche für den dritten und/oder vierten Aspekt auf Basis von Merkmalen, die nur für den ersten und/oder zweiten Aspekt genannt wurden, formuliert werden, und umgekehrt.

Insbesondere kann das Bauteil in dem dritten und vierten Aspekt als ein Funktionsbauteil des in dem Uhrenkörper angeordneten, mechanischen oder zumindest mechanisch arbeitenden Uhrwerks oder des Uhrenkörpers ausgebildet sein. Das Funktionsbauteil kann als ein eine Stoßsicherung, ein Spiralschlüssel, eine Spiralfeder, ein Anker, ein Ankerrad, ein Aufzugrad, eine Aufzugkrone, eine Krone, eine Sperrklinke, ein Sperrrad, eine Schraube zur Werksbefestigung, zumindest ein Teil eines Bandanstoßes, zumindest ein Teil einer Glasfassung, zumindest ein Teil einer Lünette ausgebildet sein.

Der digitale Fingerabdruck ist vorzugsweise als eine Datensequenz, die als Eingabe in eine vorgegebene Hash-Funktion eine vorgegebene Hash-Prüfsumme ergibt, oder als eine Blockchain beispielsweise auf dem Bauteil oder auf einem externen Server oder einem sonstigen Netzwerk hinterlegt.

Der digitale Fingerabdruck stellt eine Art "Authentifizierungsnummer" der Uhr dar, durch den diese Fälschungssicher gemacht werden kann. So kann beispielsweise nur ein autorisierter Hersteller oder Vertreiber der Uhr den digitalen Fingerabdruck auslesen und abgleichen können, und derart sicherstellen, dass die betreffende Uhr "echt" ist. Auch ein Kunde kann so eindeutig nachvollziehen, dass die von ihm ggf. zu erwerbende Uhr "echt" ist und es sich nicht um eine Fälschung bzw. ein Plagiat handelt. Ein bedeutender Vorteil dabei ist somit die Einführung einer digital auslesbaren "Kennnummer" für Uhren.

Ein derartiges Bauteil kann vom Hersteller verwendet werden, um zweifelsfrei festzustellen, dass es sich um ein Original der Uhr handelt, und um nachzuverfolgen, durch wenn eine Uhr verkauft wurde und/oder wer die Uhr gekauft hat bzw. wer sie zuletzt besaß. Zudem kann der Eigentümer die Uhr mittels dieses digitalen Fingerabdrucks als gestohlen melden. Ein Händler, ein Uhrengeschäft und/oder eine zertifizierte Werkstatt (auch solche ohne direkten Kundenkontakt), die den digitalen Fingerabdruck ausliest, kann dann entsprechend reagieren und die betreffende Uhr als Hehlerware melden.

Die vorliegende Technologie hat gegenüber dem Stand der Technik den Vorteil, dass die ansonsten oftmals leicht zu fälschenden Garantiekarten und Kartons nicht mehr notwendig sind, um die Echtheit der Uhr beim Weiterverkauf zu überprüfen. Der digital auslesbare und eindeutig identifizierbare Fingerabdruck kann ferner auch für ein Register genutzt werden, in dem Hersteller-authentifizierte Uhren eintragbar sind.

In einem solchen Register kann beispielsweise mittels eindeutiger, insbesondere verschlüsselter Hash-Wert-Zuordnung oder Blockchain-Technologie eine Käuferkette dokumentiert werden, sodass zumindest der Uhrenhersteller die Authentizität nachweisen kann. Für den Hersteller bedeutet dies, dass Plagiate leichter zu erkennen sind und damit der Anlagewert der Uhr steigt, da keine "einfachen" Fälschungen mehr existieren, vorausgesetzt, der Hersteller führt das Register ordnungsgemäß. Für den Kunden bietet dies ferner den Vorteil, sicher sein zu können, dass es sich um eine "echte" Uhr und nicht um eine Fälschung handelt.

Ein wichtiger Aspekt dabei ist, dass der digitale Fingerabdruck ferner Informationen über einen Uhrentyp und andere Details der Uhr oder eines sonstigen Luxusgegenstandes aufweisen kann. Ferner ist der digitale Fingerabdruck vorzugsweise nicht öffentlich. Dadurch wird verhindert, dass Fälscher ein vorliegendes Bauteil mit dem digitalen Fingerabdruck in ihre Fälschungen einbauen können.

Der digitale Fingerabdruck kann vorzugsweise auch über Hashing implementiert werden. Ein derartiger Hash kann beispielsweise zusammen mit der Uhrzeit oder einer sonstigen Codierung verrechnet werden, sodass nur autorisierte Benutzer die Authentifizierung vornehmen (oder nachbilden) können.

Der digitale Fingerabdruck kann vorzugsweise durch äußere Anregung des Bauteils, beispielsweise mittels eines Frequenzschlüssels, insbesondere einer vom Uhrenhersteller bestimmten Frequenz und/oder einem vom Uhrenhersteller bereitgestellten, insbesondere für jede Uhr individualisierten, Frequenzverlauf und/oder innerhalb eines vom Uhrenhersteller bereitgestellten Frequenzband, auslesbar sein. Das Auslesen des digitalen Fingerabdrucks ist vorzugsweise nur möglich, wenn der Frequenzschlüssel bekannt ist, und wenn beispielsweise eine für die Uhr vom Uhrenhersteller bereitgestellte Anregungseinrichtung verfügbar ist. Die Anregung kann elektrisch und/oder mechanisch und/oder magnetisch erfolgen. Die Anregung kann auch auf optische Art und Weise erfolgen.

Der digitale Fingerabdruck kann beispielsweise auch auf mechanische Weise in dem Bauteil bereitgestellt sein, beispielsweise durch, insbesondere code-artig, vorgesehen Ausnehmungen und/oder Auftragungen auf dem Bauteil, die beispielsweise in der Form eines bauteilindividuellen Musters vorgesehen sein können, und die bei äußerer Anregung durch den Frequenzschlüssel eine eindeutig identifizierbare Frequenzantwort als den digitalen Fingerabdruck der Uhr liefern können.

Der digitale Fingerabdruck bzw. der digital auslesbare Fingerabdruck mechanisch durch ein Fräs- und/oder Ätzmuster, alternativ oder ergänzend auch durch zumindest partielle Auftragungen, beispielsweise durch Aufdampfen von Material, innerhalb und/oder auch einer Oberfläche des Bauteils erzeugt werden. Derartige individuelle Muster können Dimensionen auf Mikrometer- und/oder Nanometer-Ebene aufweisen. Derartige Muster können vorzugsweise derart ausgebildet sein, dass sie das Bauteil nicht strukturell schwächen. Derartige Muster können dazu führen, dass das Bauteil mit einer hochindividuellen Frequenzantwort reagiert, wenn es durch einen äußeren Frequenzschlüssel angeregt wird. Die Frequenzantwort kann dann vorzugsweise durch einen Empfänger, beispielsweise eine Antenne (bspw. bei magnetischer und/oder elektrischer Anregung) oder eine Membran (bspw. bei mechanischer Anregung) und/oder durch einen Detektor (bspw. bei optischer Anregung) ausgelesen werden.

Das Speichern des digitalen Fingerabdrucks kann beispielsweise auch durch einen auf oder in dem Bauteil vorgesehenen, insbesondere nicht flüchtigen, auslesbaren Speicher erfolgen. Der Speicher kann vorzugsweise nur ausgelesen werden, wenn eine passendes Öffentlich- und Privatschlüsselpaar bereitgestellt wird.

Zum digitalen Auslesen kann das Bauteil beispielsweise auch aus einem Metamaterial hergestellt sein oder zumindest eine Beschichtung oder eine Schicht, die ein Metamaterial umfasst, aufweisen. Bei einem solchen Metamaterial kann es sich um einen künstlich hergestellten Werkstoff mit optischen, elektrischen, mechanischen und/oder magnetischen Eigenschaften, die in der Natur nicht vorkommen, handeln. Ein derartiges Metamaterial kann beispielsweise durch eine Bestimmte Schwingungsfrequenz angeregt werden und mit einer eindeutig identifizierbaren Schwingungsantwort antworten. Hierbei sind Frequenzen bis in den Gigaherz-Bereich, ggf. auch höherwertige Frequenzen, als Anregungsfrequenzen und auch als Antwortfrequenzen möglich.

Bevorzugt kann vorliegend auch eine Vorrichtung zur Anregung eines Bauteils, das dazu eingerichtet ist, einen digitalen Fingerabdruck bzw. eine digitale Identifikationsnummer der Uhr, insbesondere in auslesbarer Form, zu speichern, beansprucht sein, wobei die Vorrichtung dazu eingerichtet ist, ein Anregungssignal zum Anregen des Bauteils zu erzeugen, und darauf basierend eine Anregungsantwort des Bauteils hervorzurufen, mittels derer der digitale Fingerabdruck bzw. die digitale Identifikationsnummer auslesbar ist. Das Anregungssignal kann eine Frequenz oder ein Frequenzmuster oder einen Frequenzverlauf aufweisen. Die Anregungsfrequenz kann auch mechanische, elektrische, magnetische und/oder optische Weise erzeugbar sein. Die Vorrichtung kann eine Anregungseinrichtung aufweisen, die dazu ausgebildet ist, das Anregungssignal zu erzeugen. Die Vorrichtung kann einen Detektor aufweisen, der dazu ausgebildet ist, die Anregungsantwort des Bauteils zu empfangen und darauf basierend den digitalen Fingerabdruck bzw. die digitale Identifikationsnummer auszulesen. Die Vorrichtung kann eine Auswerte- und Recheneinrichtung aufweisen, durch die die Anregungsantwort interpretierbar und/oder auslesbar ist. Zum Auslesen der Anregungsantwort kann eine Signalverstärkung und/oder eine Signalfilterung bevorzugt sein, die mittels der Vorrichtung vorzugsweise erfolgen kann.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.
- Fig. 1: zeigt eine schematische Ansicht eines Ausführungsbeispiels einer Uhr mit einem Bauteil zur Positionsrückverfolgung der Uhr und/oder zur Bereitstellung eines digitalen Fingerabdrucks der Uhr.
- Fig. 2: zeigt eine schematische Ansicht eines weiteren Ausführungsbeispiels einer Uhr mit einem Bauteil zur Positionsrückverfolgung der Uhr und/oder zur Bereitstellung eines digitalen Fingerabdrucks der Uhr.
- Fig. 3: zeigt eine schematische Ansicht eines weiteren Ausführungsbeispiels einer Uhr mit einem Bauteil zur Positionsrückverfolgung der Uhr und/oder zur Bereitstellung eines digitalen Fingerabdrucks der Uhr.
- Fig. 4: zeigt eine schematische Ansicht eines Ausführungsbeispiels des Bauteils, das zur Bereitstellung eines digitalen Fingerabdrucks ausgebildet ist.

### Detaillierte Beschreibung der Zeichnungen

In den Figuren der Zeichnungen bezeichnen gleiche Bezugszeichen gleiche oder funktionsgleiche Elemente, Bauteile oder Komponenten, soweit nichts Gegenteiliges angegeben ist.

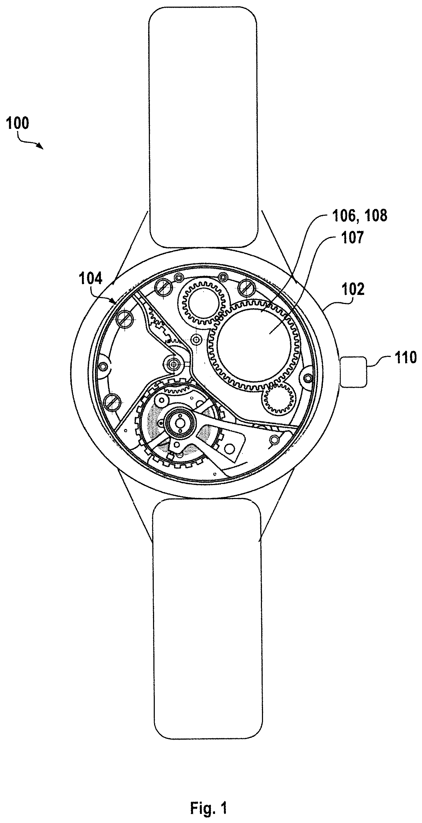

Fig. 1 zeigt eine Uhr 100. Die Uhr 100 ist vorliegend eine Armbanduhr aus dem Luxusuhrensegment. Die Uhr 100 kann auch eine Taschenuhr sein. Die Uhr 100 umfasst einen Uhrenkörper 102 und ein mechanisches Uhrwerk 104, das in dem Uhrenkörper 102 angeordnet bzw. von diesem aufgenommen ist.

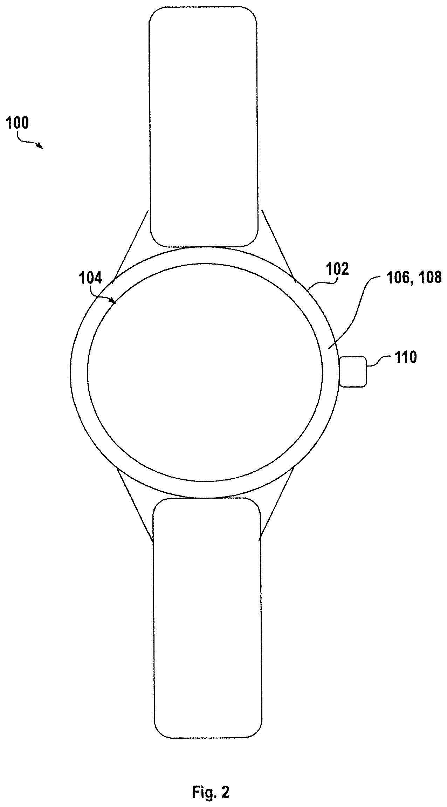

Ferner umfasst die Uhr 100 ein Bauteil 106, das auch zur Positionsrückverfolgung der Uhr 100 eingerichtet ist, jedoch ferner ein Funktionsbauteil 108 des in dem Uhrenkörper 102 angeordneten, mechanischen Uhrwerks 104 ist. Das Bauteil 106 ist vorliegend als Sperrrad 107 ausgebildet. Das Bauteil 106 ist gemäß Fig. 1 als ein Teil des mechanischen Uhrwerks 104 ausgebildet und mitsamt dem Uhrwerk 104 in dem Uhrenkörper 102 integriert. Alternativ oder ergänzend kann das Bauteil 106 auch als Teil des Uhrenkörpers 102 integral mit diesem ausgebildet sein (siehe Fig. 2).

Die Uhr 100 umfasst ferner eine Lünette 110. In anderen Ausführungen kann das Bauteil 106 auch als die Lünette 110 ausgebildet sein. Allgemein kann das Bauteil 106 bzw. das Funktionsbauteil 108 als eine Stoßsicherung, ein Rotor, ein drehbares Massestück, ein Exzenter, ein Spiralschlüssel, eine Spiralfeder, ein Anker, ein Ankerrad, ein Aufzugrad, eine Aufzugkrone, eine Krone, eine Sperrklinke, eine Schraube zur Werksbefestigung, zumindest ein Teil eines Bandanstoßes, zumindest ein Teil einer Glasfassung, zumindest ein Teil einer Lünette ausgebildet sein.

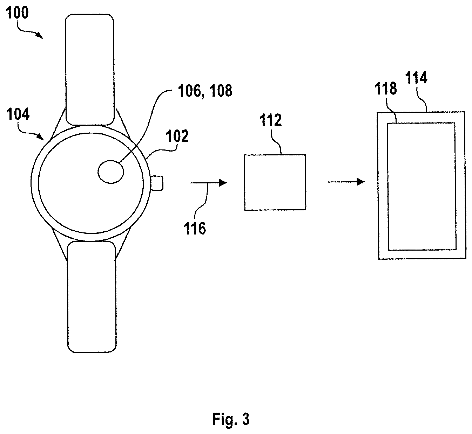

Das Bauteil 106 ist dazu eingerichtet, zur Positionsrückverfolgung ein Positionssignal 112 bereitzustellen, wobei das Positionssignal 112 optional an ein Endgerät 114 eines Nutzers der Uhr 100 und/oder an einen Server und/oder eine Cloud eines Uhrenherstellers und/oder eines Sicherheitsdienstes sendbar ist. Vorliegend ist das Bauteil 106 über eine intrinsische Bewegung des Bauteils 106 mit Energie versorgbar ist. Das Bauteil 106 ist ferner dazu ausgebildet, bei einem Ausfallen der Uhr 100 und/oder bei oder nach einem Öffnen des Uhrenkörpers 102 ein Not-Positionssignal und/oder ein Warnsignal bereitzustellen. Das Bauteil 106 umfasst vorliegend, wie in Fig. 3 schematisch gezeigt, eine drahtlose Kommunikationsschnittstelle 116 zur Übermittlung des durch das Bauteil 106 bereitgestellten Positionssignals 112 und/oder eines Alarmsignals.

Das Bauteil 106 ist ferner dazu eingerichtet, einen digitalen Fingerabdruck bzw. eine digitale Identifikationsnummer der Uhr 100, insbesondere in auslesbarer Form, zu speichern. Der digitale Fingerabdruck kann beispielsweise durch Speicherung einer Blockchain auf dem Bauteil 106 erfolgen, die durch ein dazu berichtigtes Gerät eindeutig auslesbar sein kann.

Das Bauteil 106 kann über eine Benutzeroberfläche 118 des Endgerätes 114, insbesondere kabellos, vorzugsweise nutzerspezifisch, konfigurierbar sein. Dabei kann das Bauteil 106 zur Positionsrückverfolgung nur durch einen durch den Uhrenhersteller oder einen Sicherheitsdienstleister bereitgestellten Sicherheitsschlüssel, insbesondere auf Basis einer Blockchain, aktivierbar und/oder deaktivierbar sein. Das Bauteil 106 kann ferner eine Selbsttestfunktion aufweisen, die die Funktionalität des Bauteils 106 zur Positionsrückverfolgung überprüft und vorzugsweise einen Nutzer über einen Status informiert.

Die in den Figuren gezeigten Ausführungen gelten in analoger Weise auch für ein Bauteil, das dazu eingerichtet ist, einen digitalen Fingerabdruck bzw. eine digitale Identifikationsnummer der Uhr 100, insbesondere in auslesbarer Form, zu speichern.

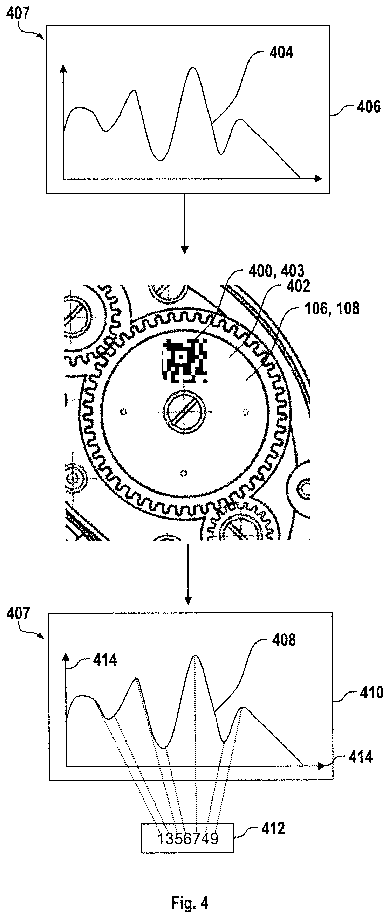

Fig. 4 zeigt das Bauteil 106, das dazu eingerichtet ist, einen digitalen Fingerabdruck 400 bzw. eine digitale Identifikationsnummer der Uhr 100 bereitzustellen. Der digitale Fingerabdruck 400 ist auf dem Bauteil 106 gespeichert. Der digitale Fingerabdruck 400 ist derart gespeichert, dass der digitale Fingerabdruck 400 auslesbar ist, insbesondere wenn bestimmte Sicherheitsvoraussetzungen für das Auslesen des digitalen Fingerabdrucks 400 erfüllt sind. Gemäß Fig. 4 ist der digitale Fingerabdruck 400 auf bzw. über mechanische Art und Weise auf dem Bauteil 106 gespeichert, nämlich indem auf einer Oberfläche 402 des Bauteils 106 ein (Code-) Muster 403 eingeätzt oder eingefräst ist. Da das Bauteil 106 vorzugsweise selbst nur wenige Millimeter oder gar wenige Mikrometer groß im Durchmesser ist, ist das Muster 403 vorzugsweise in einer Größenordnung von Nanometern bis Mikrometer. Das Muster 403 ist in die Oberfläche 402 des Bauteils 106 eingelassen, und vom Hersteller individuell für das Bauteil 106 gewählt. Das Muster 403 führt nicht zu einer strukturellen Schwächung des Bauteils 106, so dass dessen Funktionseigenschaften für die Uhr 100 beibehalten bleiben. Zum Auslesen des digitalen Fingerabdrucks 400 kann das Bauteil 106 vorzugsweise über einen Frequenzschlüssel 404 von außen durch einen Frequenz-Generator 406 einer Vorrichtung 407 zum Anregen angeregt werden. Das Bauteil 106 kann aufgrund des mechanisch bereitgestellten Musters 403 dann vorzugsweise auf die äußere Anregung durch den Frequenzschlüssel 404 mit einer bauteil- und somit vorzugsweise uhrenindividuellen Frequenzantwort 408 reagieren, die durch einen Detektor 410 der Vorrichtung 407 erfasst werden kann. Der Generator 406 und/oder der Detektor 410 kann/können auf mechanische oder elektrische und/oder magnetische oder optisch Art und Weise betrieben werden.

Die Frequenzantwort 408 kann vorzugsweise derart interpretierbar sein, dass spezifische Informationen, beispielsweise eine "Authentifizierungsnummer 412" des Bauteils 106 (und damit vorzugsweise der Uhr 100) aus Amplituden- und/oder Phaseninformationen 414 der Frequenzantwort 408 ermittelbar sind.

### Bezugszeichenliste

- 100: Uhr
- 102: Uhrenkörper
- 104: Uhrwerk
- 106: Bauteil
- 108: Funktionsbauteil
- 110: Lünette
- 112: Positionssignal
- 114: Endgerät
- 116: Kommunikationsschnittstelle
- 118: Benutzeroberfläche
- 400: Fingerabdruck
- 402: Oberfläche
- 403: Muster
- 404: Frequenzschlüssel
- 406: Frequenz-Generator
- 407: Vorrichtung
- 408: Frequenzantwort
- 410: Detektor
- 412: Authentifizierungsnummer
- 414: Amplituden- und/oder Phaseninformationen

## Patentansprüche

1. Uhr (100), insbesondere eine Armbanduhr oder eine Taschenuhr, mit einem Uhrenkörper (102), einem mechanischen Uhrwerk (104), das in dem Uhrenkörper (102) angeordnet ist, und einem Bauteil (106) zur Positionsrückverfolgung der Uhr (100), wobei das Bauteil (106) als ein Teil des mechanischen Uhrwerks (104) oder des Uhrenkörpers (102) in dem Uhrenkörper (102) integriert und/oder angeordnet ist.

2. Uhr nach Anspruch 1, wobei das Bauteil (106) dazu eingerichtet ist, eine zur Positionsrückverfolgung verwendete elektrische Energie durch eine elektrische Energie und/oder mechanische Bewegungsenergie der Uhr (100) zu beziehen.

3. Uhr nach einem der vorhergehenden Ansprüche, wobei das Bauteil (106) dazu eingerichtet ist, zur Positionsrückverfolgung ein Positionssignal (112) bereitzustellen, wobei das Positionssignal (112) optional an ein Endgerät (114) eines Nutzers der Uhr (100) und/oder an einen Server und/oder eine Cloud eines Uhrenherstellers und/oder eines Sicherheitsdienstes sendbar ist.

4. Uhr nach einem der vorhergehenden Ansprüche, wobei das Bauteil (106) mit einem mobilen Tracking-Device koppelbar ist, und/oder wobei das Bauteil (106) dazu eingerichtet ist, einen digitalen Fingerabdruck bzw. eine digitale Identifikationsnummer der Uhr (100), insbesondere in auslesbarer Form, zu speichern.

5. Uhr nach einem der vorhergehenden Ansprüche, wobei das Bauteil (106) als ein Funktionsbauteil (108) des in dem Uhrenkörper (102) angeordneten, mechanischen Uhrwerks (104) oder des Uhrenkörpers (102) ausgebildet ist.

6. Uhr nach Anspruch 5, wobei das Funktionsbauteil (108) als eine Stoßsicherung, ein Spiralschlüssel, eine Spiralfeder, ein Anker, ein Ankerrad, ein Aufzugrad, eine Aufzugkrone, eine Krone, ein Rotor, ein drehbares Massestück, eine Sperrklinke, ein Sperrrad, eine Schraube zur Werksbefestigung, zumindest ein Teil eines Bandanstoßes, zumindest ein Teil einer Glasfassung, zumindest ein Teil einer Lünette (110) ausgebildet ist.

7. Uhr nach einem der vorhergehenden Ansprüche, wobei das Bauteil (106) über eine intrinsische Bewegung des Bauteils (106) und/oder über eine mittels der Uhr (100) bereitgestellte Energy Harvesting Funktion mit Energie versorgbar ist.

8. Uhr nach einem der vorhergehenden Ansprüche, wobei das Bauteil (106) dazu ausgebildet ist, bei einem Ausfallen der Uhr (100) und/oder bei oder nach einem Öffnen des Uhrenkörpers (102) ein Not-Positionssignal und/oder ein Warnsignal bereitzustellen.

9. Uhr nach einem der vorhergehenden Ansprüche, wobei das Bauteil (106) und/oder die Uhr (100) eine drahtlose Kommunikationsschnittstelle (116) zur Übermittlung eines durch das Bauteil (106) bereitgestellten Positionssignals (112) und/oder eines Alarmsignals umfasst.

10. Uhr nach einem der vorhergehenden Ansprüche, wobei das Bauteil (106) über eine Benutzeroberfläche (118) eines Endgerätes (114), insbesondere kabellos, vorzugsweise nutzerspezifisch, konfigurierbar.

11. Uhr nach einem der vorhergehenden Ansprüche, wobei das Bauteil (106) zur Positionsrückverfolgung nur durch einen durch den Uhrenhersteller oder einen Sicherheitsdienstleister bereitgestellten Sicherheitsschlüssel, insbesondere auf Basis einer Blockchain, aktivierbar und/oder deaktivierbar ist.

12. Uhr nach einem der vorhergehenden Ansprüche, wobei das Bauteil (106) eine Selbsttestfunktion aufweist, die die Funktionalität des Bauteils (106) zur Positionsrückverfolgung überprüft und vorzugsweise einen Nutzer über einen Status informiert.

13. Bauteil (106) zur Positionsrückverfolgung einer Uhr (100), wobei das Bauteil (106) als ein Teil eines mechanischen Uhrwerks (104) oder eines Uhrenkörpers (102) in dem Uhrenkörper (102) der Uhr (100) integrierbar und/oder anordenbar ist, oder wobei das Bauteil (106) in einem sonstigen Luxusgegenstand integrierbar und/oder anordenbar ist.

14. Uhr (100), insbesondere eine Armbanduhr oder eine Taschenuhr, mit einem Uhrenkörper (102), einem mechanischen Uhrwerk (104), das in dem Uhrenkörper (102) angeordnet ist, und einem Bauteil (106), das dazu eingerichtet ist, einen digitalen Fingerabdruck bzw. eine digitale Identifikationsnummer der Uhr (100), insbesondere in auslesbarer Form, zu speichern, wobei das Bauteil (106) als ein Teil des mechanischen Uhrwerks (104) oder des Uhrenkörpers (102) in dem Uhrenkörper (102) integriert und/oder angeordnet ist.

15. Bauteil (106), das dazu eingerichtet ist, einen digitalen Fingerabdruck bzw. eine digitale Identifikationsnummer der Uhr (100), insbesondere in auslesbarer Form, zu speichern, wobei das Bauteil (106) als ein Teil eines mechanischen Uhrwerks (104) oder eines Uhrenkörpers (102) in dem Uhrenkörper (102) der Uhr (100) integrierbar und/oder anordenbar ist, oder wobei das Bauteil (106) in einem sonstigen Luxusgegenstand integrierbar und/oder anordenbar ist.

## Geänderte Patentansprüche

### Geänderte Patentansprüche gemäss Regel 137(2) EPÜ.

1. Uhr (100), insbesondere eine Armbanduhr oder eine Taschenuhr, mit einem Uhrenkörper (102), einem mechanischen Uhrwerk (104), das in dem Uhrenkörper (102) angeordnet ist, und einem Bauteil (106) zur Positionsrückverfolgung der Uhr (100), wobei das Bauteil (106) als ein Teil des mechanischen Uhrwerks (104) in dem Uhrenkörper (102) integriert ist.

2. Uhr nach Anspruch 1, wobei das Bauteil (106) dazu eingerichtet ist, eine zur Positionsrückverfolgung verwendete elektrische Energie durch eine elektrische Energie und/oder mechanische Bewegungsenergie der Uhr (100) zu beziehen.

3. Uhr nach einem der vorhergehenden Ansprüche, wobei das Bauteil (106) dazu eingerichtet ist, zur Positionsrückverfolgung ein Positionssignal (112) bereitzustellen, wobei das Positionssignal (112) optional an ein Endgerät (114) eines Nutzers der Uhr (100) und/oder an einen Server und/oder eine Cloud eines Uhrenherstellers und/oder eines Sicherheitsdienstes sendbar ist.

4. Uhr nach einem der vorhergehenden Ansprüche, wobei das Bauteil (106) mit einem mobilen Tracking-Device koppelbar ist, und/oder wobei das Bauteil (106) dazu eingerichtet ist, einen digitalen Fingerabdruck bzw. eine digitale Identifikationsnummer der Uhr (100), insbesondere in auslesbarer Form, zu speichern.

5. Uhr nach einem der vorhergehenden Ansprüche, wobei das Bauteil (106) als ein Funktionsbauteil (108) des in dem Uhrenkörper (102) angeordneten, mechanischen Uhrwerks (104) ausgebildet ist.

6. Uhr nach Anspruch 5, wobei das Funktionsbauteil (108) als eine Stoßsicherung, ein Spiralschlüssel, eine Spiralfeder, ein Anker, ein Ankerrad, ein Aufzugrad, eine Aufzugkrone, eine Krone, ein Rotor, ein drehbares Massestück, eine Sperrklinke, ein Sperrrad, eine Schraube zur Werksbefestigung ausgebildet ist.

7. Uhr nach einem der vorhergehenden Ansprüche, wobei das Bauteil (106) über eine intrinsische Bewegung des Bauteils (106) und/oder über eine mittels der Uhr (100) bereitgestellte Energy Harvesting Funktion mit Energie versorgbar ist.

8. Uhr nach einem der vorhergehenden Ansprüche, wobei das Bauteil (106) dazu ausgebildet ist, bei einem Ausfallen der Uhr (100) und/oder bei oder nach einem Öffnen des Uhrenkörpers (102) ein Not-Positionssignal und/oder ein Warnsignal bereitzustellen.

9. Uhr nach einem der vorhergehenden Ansprüche, wobei das Bauteil (106) und/oder die Uhr (100) eine drahtlose Kommunikationsschnittstelle (116) zur Übermittlung eines durch das Bauteil (106) bereitgestellten Positionssignals (112) und/oder eines Alarmsignals umfasst.

10. Uhr nach einem der vorhergehenden Ansprüche, wobei das Bauteil (106) über eine Benutzeroberfläche (118) eines Endgerätes (114), insbesondere kabellos, vorzugsweise nutzerspezifisch, konfigurierbar.

11. Uhr nach einem der vorhergehenden Ansprüche, wobei das Bauteil (106) zur Positionsrückverfolgung nur durch einen durch den Uhrenhersteller oder einen Sicherheitsdienstleister bereitgestellten Sicherheitsschlüssel, insbesondere auf Basis einer Blockchain, aktivierbar und/oder deaktivierbar ist.

12. Uhr nach einem der vorhergehenden Ansprüche, wobei das Bauteil (106) eine Selbsttestfunktion aufweist, die die Funktionalität des Bauteils (106) zur Positionsrückverfolgung überprüft und vorzugsweise einen Nutzer über einen Status informiert.

13. Bauteil (106) zur Positionsrückverfolgung einer Uhr (100), wobei das Bauteil (106) als ein Teil eines mechanischen Uhrwerks (104) in einem Uhrenkörper (102) der Uhr (100) integrierbar und/oder anordenbar ist.
